# EUROPÄISCHE PATENTSCHRIFT

(11) **EP 3 401 242 B1**
(45) Veröffentlichungstag und Bekanntmachung des Hinweises auf die Patenterteilung: **07.04.2021**
(21) Anmeldenummer: 18180004.6
(22) Anmeldetag: 16.02.2015
(51) Int. Cl.: B65G 17/48, B65G 17/20

(54) **HÄNGEFÖRDEREINRICHTUNG**
OVERHEAD CONVEYOR SYSTEM
SYSTÈME DE CONVOYAGE AÉRIEN

(30) Priorität: 24.02.2014 DE 102014203299
(43) Veröffentlichungstag der Anmeldung: 14.11.2018
(62) Teilanmeldung aus: 15704555.0
(73) Patentinhaber: RSL Logistik GmbH & Co. KG, 86899 Landsberg (DE)
(72) Erfinder: SCHÖNENBERGER, Rolf, 86899 Landsberg/Lech (DE)
(74) Vertreter: Weickmann & Weickmann PartmbB

(56) Entgegenhaltungen:
- EP-A2- 1 081 061
- WO-A1-2014/012965
- US-A- 5 697 508

## Beschreibung

Die vorliegende Erfindung betrifft eine Hängefördereinrichtung, umfassend eine Führungsschienenanordnung und ein Hängetaschen-System, umfassend wenigstens zwei, vorzugsweise eine Vielzahl von bewegbar an der Führungsschienenanordnung geführten Hängetaschen als Fördergutbehälter zum Transport von Fördergut in einer Hängefördereinrichtung, mit einer ersten Taschenseitenwand und einer zweiten Taschenseitenwand, die einander gegenüberliegend einen Fördergutaufnahmebereich zwischen sich begrenzen und in einem Klappverbindungsbereich so miteinander verbunden sind, dass sie zum Öffnen und Schließen des Fördergutaufnahmebereiches auseinanderklappbar und zusammenklappbar sind, und mit einem Anhängmittel zum Anhängen der Hängetasche an eine Führungsschienenanordnung einer Hängefördereinrichtung. Dabei weist die erste Taschenseitenwand zumindest einen starren Randkontur-Bereich auf und ist daran um eine Schwenkachse schwenkbeweglich mit dem Anhängmittel verbunden, und die zweite Taschenseitenwand ist derart mit dem Anhängmittel verbunden oder davon beaufschlagbar, dass durch Schwenken der ersten Taschenseitenwand um die Schwenkachse die erste und die zweite Taschenseitenwand auseinanderklappbar und zusammenklappbar sind.

Derartige Hängetaschen sind beispielsweise aus der WO 2014/012965 A1 bekannt. Die Hängetaschen sind so gestaltet, dass sie aus einer Transportstellung, in welcher der Fördergutaufnahmebereich weitgehend geschlossen ist und die beiden Taschenseitenwände im Wesentlichen vertikal nach unten hängen, an einer Ladestation geöffnet werden kann, gegebenenfalls unter Verbleib an der Hängefördereinrichtung, und zwar durch Schwenken der ersten Taschenseitenwand aus ihrer vertikalen Stellung heraus um die vorzugsweise horizontale Schwenkachse. Dabei kann die erste Taschenseitenwand in eine zumindest annähernd horizontale Lage gebracht werden Die WO 2014/012965 A1 offenbart eine Hängefördereinrichtung mit den Merkmalen des Oberbegriffs des Anspruchs 1.

Bei dieser Schwenkbewegung der ersten Taschenseitenwand kommt es zu einem automatischen Aufklappen der Hängetasche, da die zweite Taschenseitenwand von dem vorzugsweise an der Hängefördereinrichtung hängenden und nach oben gerichteten Anhängmittel so beaufschlagt oder mit diesem verbunden ist, dass sie der Schwenkbewegung der ersten Taschenseitenwand nicht in einem relevanten Maße folgen kann.

In automatisierten Warenlagern, Produktionsstätten und beim Warentransport ganz allgemein besteht häufig die Notwendigkeit, als Fördergut verschiedenartige Artikel, die sich in Gestalt, Material oder Größe erheblich unterscheiden können, zu transportieren und beispielsweise in einem Kommissionierungsverfahren zu einem Auftrag oder einer Bestellung zusammenzustellen.

Vor dem Hintergrund dieses Standes der Technik besteht die Aufgabe der vorliegenden Erfindung darin, die bekannte Hängetasche so weiter zu entwickeln, dass sie in flexibler Weise an verschiedenartige Artikel als Fördergut angepasst werden kann.

Diese Aufgabe wird gelöst durch eine Hängefördereinrichtung nach Anspruch 1. Bevorzugte Ausführungsformen sind Gegenstand der abhängigen Ansprüche.

Erfindungsgemäß ist zur Lösung dieser Aufgabe vorgesehen, welche nur in Kombination mit dem beginnend auf Seite 6 beschriebenen Hängetaschen-System und als Teil einer beginnend auf Seite 7 beschriebenen Hängefördereinrichtung vorgeschlagen wird, dass die vorgenannte Hängetasche eine Basis-Baugruppe und ein Wechselelement umfasst oder daraus gebildet ist, wobei die Basis-Baugruppe das Anhängmittel und den starren Randkontur-Bereich aufweist oder daraus gebildet ist, und das Wechselelement wenigstens einen Teil der zweiten Taschenseitenwand, vorzugsweise die gesamte zweite Taschenseitenwand umfasst oder daraus gebildet ist und auswechselbar an der Basis-Baugruppe vorgesehen ist.

Durch den zweiteiligen Aufbau der Hängetasche der erfindungsgemäßen Hängefördereinrichtung aus der Basis-Baugruppe und dem auswechselbaren Wechselelement, kann die Hängetasche durch Verwendung verschiedenartiger Wechselelemente auf einfache Weise an verschiedenartige Artikel als Fördergut angepasst werden. Durch geeignete Auswahl etwa eines weichen oder polsternden Materials für das Wechselelement können Hängetaschen zusammengestellt werden, die sich beispielsweise zur Aufnahme besonders hochwertiger oder kratzempfindlicher Artikel eignen.

Auch können Wechselelemente verschiedener Größe oder Elastizität verwendet werden, um Hängetaschen mit verschiedenen Volumina für Artikel unterschiedlicher Größe zu erzeugen.

Ein weiterer Vorteil der Hängetasche der erfindungsgemäßen Hängefördereinrichtung besteht darin, dass das Wechselelement wie auch die Basis-Baugruppe auf diese Weise leichter zu reinigen ist. Die Wechselelemente können beispielsweise abgenommen und separat, vorzugsweise maschinell gewaschen werden, insbesondere bei Ausbildung aus einem maschinenwaschbaren Textil-Material.

Unter der Auswechselbarkeit des Wechselelements soll vorzugsweise verstanden werden, dass ein Wechselelement an der Basis-Baugruppe angebracht und auch wieder von dieser abgelöst werden kann, ohne die Basis-Baugruppe dabei in relevanter Weise zu beschädigen.

Grundsätzlich ist nicht ausgeschlossen, ein Einweg-Wechselelement einzusetzen, das nach einem einmaligen Gebrauch von der Basis-Baugruppe beispielsweise durch Abreißen getrennt und dann entsorgt werden kann, insbesondere bei der Verwendung für starke schmutzende Artikel als Fördergut. Aus Gründen der Kostenreduktion und des Umweltschutzes wird jedoch bevorzugt, dass das Wechselelement dazu ausgebildet ist, wiederholt an der Basis-Baugruppe angebracht und von dieser abgelöst zu werden, und zwar besonders bevorzugt, ohne dabei wesentliche Beschädigungen zu erleiden und auch ohne Beschädigungen an der Basis-Baugruppe zu verursachen.

Der Montageaufwand und die zur Montage benötigte Zeit können reduziert werden, indem das Wechselelement so ausgebildet ist, dass es ohne Verwendung von Werkzeug wie Schraubendrehern oder Ähnlichem an der Basis-Baugruppe angebracht und von dieser abgelöst werden kann, wie nachfolgend noch genauer beschrieben wird.

Gemäß einer bevorzugten Weiterbildung ist das Wechselelement wenigstens abschnittsweise aus einem formschlaffen Material, insbesondere Textil oder/und aus einem elastisch nachgiebigen Material, vorzugsweise aus Kunststoff, beispielsweise einer elastischen Kunststoff-Folie, ausgebildet.

Hierdurch kann sich das Wechselelement an unterschiedlich große Artikel als Fördergut anpassen und diese in der geschlossenen Stellung der Hängetasche gegen die erste Taschenseitenwand andrücken und auf diese Weise zumindest in gewissem Maße fixieren.

Auch die Ausbildung des Wechselelements als wenigstens teilweise formstabiles Element, etwa eines auswechselbar an der Basis-Baugruppe montierten stabilen Rahmens mit einer vorzugsweise elastischen Textil- oder Folien-Bespannung, oder auch als vollständig formstabiles Element, etwa als auswechselbar montierter Deckel oder Haube, soll nicht ausgeschlossen sein.

Um das Wechselelement leichter an der Basis-Baugruppe anbringen zu können oder/und das Fördergut besonders gut vor äußeren Einflüssen zu schützen oder besonders sicher aufzunehmen, kann vorgesehen sein, dass das Wechselelement als höchstens auf zwei Seiten offene Hülle oder höchstens auf einer Seite offene Tasche ausgebildet ist. Das Wechselelement kann also als eine Art "Rucksack" ausgebildet sein, der auswechselbar an der Basis-Baugruppe als Tragegestell vorgesehen ist.

Eine besonders einfache und weitgehend werkzeugfreie Montage des Wechselelements an der Basis-Baugruppe kann dadurch erreicht werden, dass das Wechselelement vermittels einer Klemm- oder Klipsverbindung auswechselbar an der Basis-Baugruppe vorgesehen ist, beispielsweise vermittels eines Klemmbügels. Hier bieten sich für den Fachmann zahlreiche Variationen an, beispielsweise Druckknöpfe, Reiß- oder Klettverschlüsse oder Ähnliches. Auch aufwendigere, lösbare Verbindungen wie Schraubverbindungen und lösbare Schweiß- oder Fügeverbindungen sollen grundsätzlich nicht ausgeschlossen sein. Beispielsweise können thermische Verbindungen durch erneutes Erwärmen unter Umständen wieder gelöst werden.

Gemäß einer bevorzugten Weiterbildung ist vorgesehen, dass die erste Taschenseitenwand ein Tablett umfasst und an dem Tablett schwenkbeweglich mit dem Anhängmittel verbunden ist, wobei das Wechselelement auswechselbar an dem Tablett vorgesehen ist. Das Tablett kann hierbei unterschiedliche Formen (rechteckig, rund, oval etc.) aufweisen und beispielsweise aus Hartkunststoff oder einem anderen formstabilen Material ausgebildet sein, zum Beispiel in Tiefzieh-Technik. Hierdurch wird die Stabilität der Hängetaschen erhöht. Auch ist ein vorzugsweise beschichtetes Kartonmaterial möglich, dessen Stabilität beispielsweise durch eine wabenartige Struktur erhöht sein kann.

Insbesondere zur Aufnahme von Kleinteilen kann vorgesehen sein, dass an dem Wechselelement wenigstens eine Tasche oder ein Trennelement zur Unterteilung des Fördergutaufnahmebereiches in mehrere Teilbereiche vorgesehen ist.

Es kann vorgesehen sein, dass das Anhängmittel der vorstehend beschriebenen Hängetaschen eine Einhängeinrichtung zum Einhängen von beispielsweise Kleiderbügeln aufweist, etwa in Form einer Einhängöffnung oder eines geeigneten Hakens, so dass auch Hängegut an den Hängetaschen aufgenommen und zusammen mit diesen transportiert werden kann.

Die vorliegende Erfindung betrifft ein Hängetaschen-System mit wenigstens zwei, vorzugsweise einer Vielzahl von erfindungsgemäßen Hängetaschen, wie sie zuvor beschrieben wurden, wobei das Hängetaschen-System Teil der erfindungsgemäßen Hängefördereinrichtung ist, wie beginnend auf Seite 7 näher beschrieben.

Zur Lösung der vorstehend erwähnten Aufgabe ist hierbei erfindungsgemäß vorgesehen, dass die Hängetaschen sich in wenigstens einem aus Größe, Gestalt und Material der zweiten Taschenseitenwand bzw. des Wechselelements unterscheiden, wobei wenigstens die Randkontur-Bereiche und die Anhängmittel, vorzugsweise die Basis-Baugruppen für die wenigstens zwei Hängetaschen gleichartig sind, vorzugsweise für eine Vielzahl oder für alle Hängetaschen des Hängetaschen-Systems.

Ein derartiges Hängetaschen-System ermöglicht eine flexible Anpassung an verschiedenartige Artikel oder Warengruppen als Fördergut und erlaubt eine erhebliche Reduzierung der Kosten durch die gleichen Randkontur-Bereiche und Anhängmittel.

Bei diesem Aspekt der Zuordnung von individualisierten Hängetaschen an bestimmte Warengruppen kommt es nicht unbedingt auf die Auswechselbarkeit eines Wechselelements an. In diesem Fall kann die zweite Taschenseitenwand auch dauerhaft und unlösbar mit der ersten Taschenseitenwand oder/und dem Anhängmittel verbunden sein. Durch Aufbauen der Hängetaschen jeweils aus einer Basis-Baugruppe und einem daran auswechselbar vorgesehenen Wechselelement können jedoch die Kosten des Systems erheblich reduziert werden.

Insbesondere in großen Warenlagern, in welchen verschiedenartige Aufträge zusammengestellt werden und entsprechend eine Vielzahl unterschiedlicher Typen von Hängetaschen zum Einsatz kommen, kann vorzugsweise vorgesehen sein, dass die zweiten Taschenseitenwände oder die Wechselelemente jeweils mit einer vorzugsweise automatisch auslesbaren Kennung versehen sind, beispielsweise in der Form eines Strichcodes, eines 2D-Codes oder eines RFID-Transponders. Insbesondere bei Verwendung verschiedenartiger Basis-Baugruppen in einem System kann es vorteilhaft sein, zusätzlich auch die Basis-Baugruppen mit entsprechenden Kennungen zu versehen.

Derartige Kennungen erleichtern die automatisierte Auswahl bzw. das Zusammenstellen von Hängetaschen für bestimmte Artikel.

Schutz beansprucht wird für eine Hängefördereinrichtung, umfassend das Hängetaschen-System mit mindestens zwei erfindungsgemäßen Hängetaschen, eine Führungsschienenanordnung, an der die Hängetaschen geführt bewegbar sind, und separate Lager für die Basis-Baugruppen und die verschiedenen Wechselelemente.

Hierbei umfasst die Hängefördereinrichtung erfindungsgemäß separate Lager für die Basis-Baugruppen und die verschiedenen Wechselelemente und wenigstens eine Station zur manuellen oder wenigstens teilweise, vorzugsweise vollständig automatisierten Zusammenstellung von Hängetaschen, die dazu eingerichtet ist, jede Hängetasche aus jeweils einer Basis-Baugruppe und einem ausgewählten Wechselelement zusammenzustellen.

Im Betrieb solch einer Hängefördereinrichtung können die Hängetaschen oder deren Bestandteile in Zuordnung zu bestimmten Warengruppen zu den betreffenden Waren herangeführt werden, so dass insoweit schon eine Vorsortierung der Hängetaschen in Abbildung auf die von ihnen zu transportierenden Waren erfolgen kann.

Nachfolgend wird die vorliegende Erfindung anhand eines bevorzugten Ausführungsbeispiels einer Hängetasche erläutert, die in den beiliegenden Figuren 1 bis 5 dargestellt ist. Dabei zeigt:
Fig. 1 in den Teilabbildungen 5a) und 5b) das Ausführungsbeispiel der Hängetasche der erfindungsgemäßen Hängefördereinrichtung in einer Transportstellung (a) und in einer Ladestellung (b).
Fig. 2 zeigt in den Teilabbildungen 2a) und 2b) die Basis-Baugruppe der Hängetasche aus Figur 1 in der Transportstellung (a) und der Ladestellung (b).
Fig. 3 zeigt einen Klemmbügel als Beispiel eines Befestigungsmittels zur auswechselbaren Befestigung des Wechselelements an der Basis-Baugruppe der Hängetasche aus Figur 1.
Fig. 4 zeigt den Gegenstand von Figur 2b) mit eingefügtem Klemmbügel aus Figur 3, und
Fig. 5 zeigt in den Teilabbildungen 5a) und 5b) das Wechselelement der Hängetasche aus Figur 1 in einer Vorderansicht (a) und einer Rückansicht (b), wobei in Teilabbildung 5b) der Klemmbügel aus Figur 3 in das Wechselelement eingesetzt ist.

Bei allen Figuren handelt es sich um stark vereinfachte Schemazeichnungen, die lediglich das Prinzip der Erfindung verdeutlichen sollen und insbesondere nicht maßgeblich zu verstehen sind. Um die Figuren nicht zu überfrachten, sind nicht alle Elemente in jeder Figur mit Bezugszeichen versehen, insbesondere in dem Fall mehrerer gleichartiger Elemente in einer Figur.

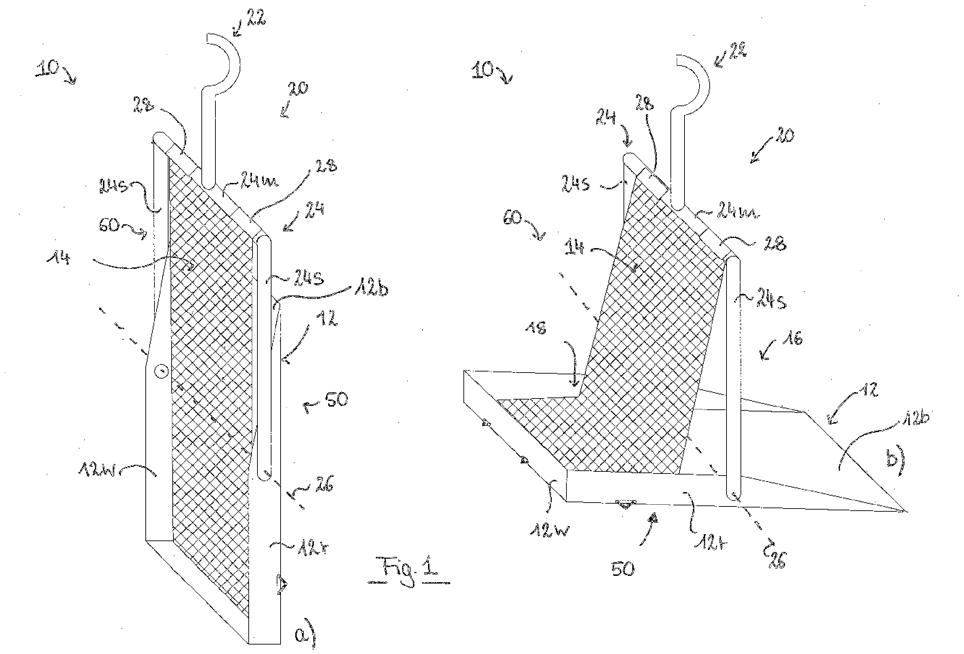

Figur 1 zeigt ein Ausführungsbeispiel einer Hängetasche 10 als Fördergutbehälter zum Transport von Fördergut in einer in den Figuren nicht weiter dargestellten Hängefördereinrichtung.

Die Hängetasche 10 umfasst eine erste Taschenseitenwand 12, vorliegend in Form eines formstabilen Tabletts, und eine zweite Taschenseitenwand 14, hier aus einem elastischen Textil-Material, die einander gegenüberliegend einen Fördergutaufnahmebereich 16 (vgl. Fig. 1b) zwischen sich begrenzen und in einem Klappverbindungsbereich 18 so miteinander verbunden sind, dass sie zum Öffnen und Schließen des Fördergutaufnahmebereiches 16 auseinander- und zusammenklappbar sind.

Figur 1a) zeigt die Hängetasche 10 in einer Transportstellung, in welcher die erste Taschenseitenwand 12 und die zweite Taschenseitenwand 14 zusammengeklappt sind und im Wesentlichen vertikal herabhängen, und Figur 1b) zeigt die Hängetasche 10 in einer Ladestellung, in welcher die erste und die zweite Taschenseitenwand 12, 14 auseinandergeklappt sind, und ein Artikel in den Fördergutaufnahmebereich 16 eingelegt oder aus diesem entnommen werden kann. Der Begriff "Laden" soll hier stets sowohl das Beladen wie auch das Entladen beinhalten.

Weiterhin umfasst die Hängetasche 10 der erfindungsgemäßen Hängefördereinrichtung ein Anhängmittel 20 zum Anhängen der Hängetasche 10 an eine hier nicht weiter dargestellte Führungsschienenanordnung einer Hängefördereinrichtung.

Das Anhängmittel 20 kann, wie in dem dargestellten Ausführungsbeispiel, als mit einem Haken 22 versehener, U-förmiger Bügel 24 ausgebildet sein, der zwei parallele Schenkel 24s, erfasst, die durch ein im Wesentlichen horizontal verlaufendes Mittelteil 24m miteinander verbunden sind. Anstelle des Hakens 22, der hier nur als einfaches Beispiel illustriert ist, kann etwa ein üblicher (Mini-)Trolley eingesetzt werden. Insbesondere kann vorgesehen sein, dass das Anhängmittel ein Gelenk umfasst, welches es eine Drehung der an der Führungsschienenanordnung angehängten Hängetasche um eine vertikale Achse (etwa um bis zu 90°) ermöglicht, oder das Anhängmittel kann insoweit auf Torsion belastbar sein.

An dem Anhängmittel 20 kann eine Einhängvorrichtung 23 zum Beispiel in Form eines Schlitzes oder in Form eines asymmetrisch vorstehenden Auges vorgesehen sein, etwa um Kleiderbügel an dem Anhängmittel anbringen zu können, für Artikel, die aufgrund ihrer Größe oder Beschaffenheit nicht in die Hängetasche 10 hinein passen und hängend transportiert werden sollen. Auch kann vorgesehen sein, die Konturen der in Transportrichtung vorderen Fläche und der in Transportrichtung hinteren Fläche des Anhängmittels wenigstens abschnittsweise, vorzugsweise vollständig komplementär zueinander auszubilden, so dass benachbarte Hängetaschen insbesondere im Leerzustand und in der Transportstellung ineinander "stapelbar" sind und auf wenig Platz gestaut werden können, wobei komplementären Konturen sich gegenseitig stabilisieren.

Das Anhängmittel 20 ist um eine Schwenkachse 26 schwenkbar mit einem starren Randkontur-Bereich 12r der ersten Taschenseitenwand 12 verbunden.

In dem vorliegenden Ausführungsbeispiel ist die erste Taschenseitenwand 12 als formstabiles Tablett ausgebildet, mit einem Boden 12b und einer davon auf drei von vier Seiten des Bodens 12b im Wesentlichen senkrecht abstehenden Seitenwand 12w, die den starren Randkontur-Bereich 12r bildet.

Die zweite Taschenseitenwand 14 ist an einem Ende mit dem Anhängmittel 20, genauer mit dem Mittelteil 24m des Bügels 24 verbunden, so dass durch Schwenken der ersten Taschenseitenwand 12 um die Schwenkachse 26 die erste und die zweite Taschenseitenwand 12, 14 auseinander-und zusammengeklappt werden.

Zur auswechselbarem Befestigung der zweiten Taschenseitenwand 14 an dem Bügel 24 können beispielsweise zwei hier nur schematisch angedeutete Klemmen 28 als Befestigungsmittel vorgesehen sein.

Das in den Figuren dargestellte Ausführungsbeispiel der Hängetasche 10 der erfindungsgemäßen Hängefördereinrichtung umfasst eine Basis-Baugruppe 50, die das Anhängmittel 20 und die erste Taschenseitenwand 12 umfasst, und ein Wechselelement 60, welches wenigstens einen Teil der zweiten Taschenseitenwand 14, vorliegend die gesamte Taschenseitenwand 14 umfasst und auswechselbar an der Basis-Baugruppe 50 vorgesehen ist.

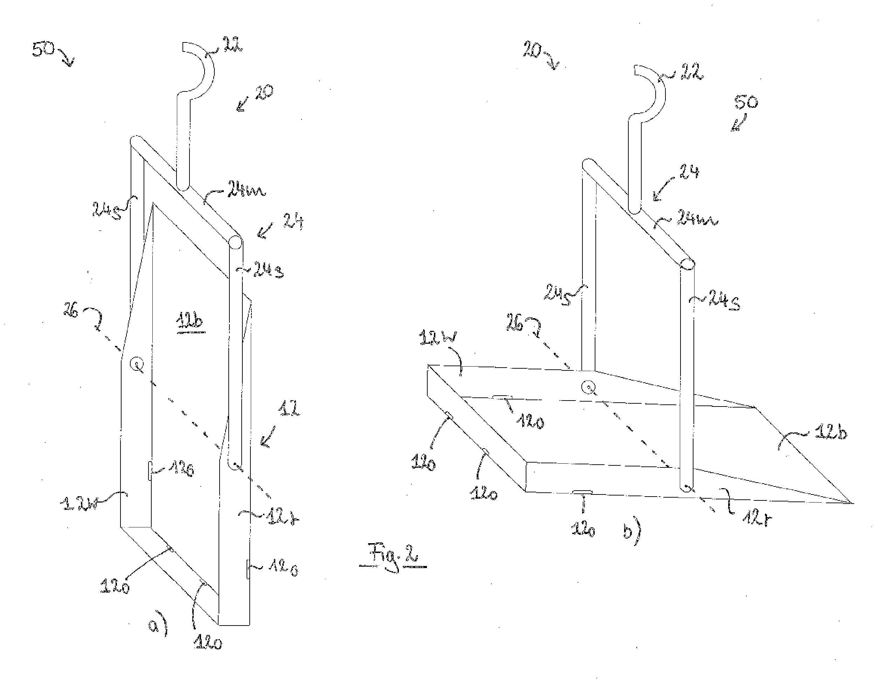

Figur 2 stellt die Basis-Baugruppe 50 der Hängetasche 10 der erfindungsgemäßen Hängefördereinrichtung ohne das Wechselelement 60 in der Transportstellung (a) und der Ladestellung (b) dar.

Hierbei ist deutlich zu erkennen, dass in dem Bereich der Kante, in welchem der Boden 12b und die Seitenwand 12w der ersten Taschenseitenwand 12 aneinander stoßen, vier Öffnungen 12o vorgesehen sind, durch ein später noch zu beschreibender Klemmbügel 70 als Befestigungsmittel hindurch gesteckt werden kann, um das Wechselelement 60 auswechselbar an der Basis-Baugruppe 50 zu fixieren.

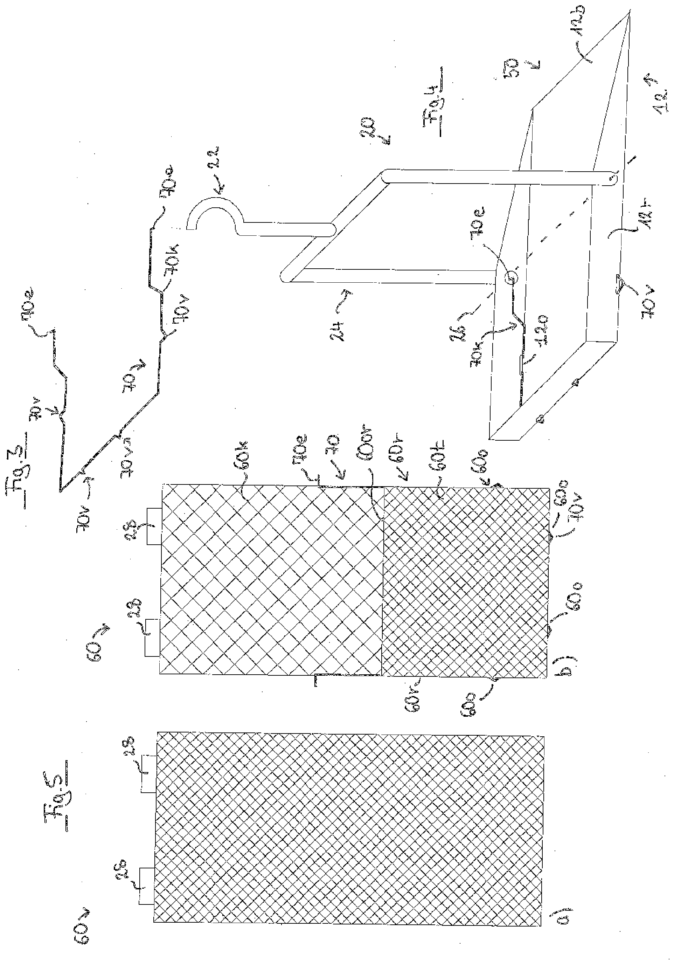

Der entsprechende Klemmbügel 70 ist isoliert in Figur 3 dargestellt. Er ist beispielsweise aus einem Metalldraht hergestellt und weist 4 Eingriffsvorsprünge 70v auf, die so angeordnet sind, dass sie in die Öffnungen 12o von dem Tablett der ersten Taschenseitenwand 12 hinein passen, wenn der Klemmbügel 70, wie in Figur 4 dargestellt, an der Basis-Baugruppe 50 montiert wird.

Die zwei nach außen abgebogenen Enden 70e des Klemmbügels 70 können dabei in eine Öffnung im Bereich der Gelenk-Verbindung zwischen dem Anhängmittel 20 und der ersten Taschenseitenwand 12 eingesteckt werden.

Im vorliegenden Ausführungsbeispiel ist das Wechselelement 60 ausgebildet als eine Tasche aus einem elastischen Textil- oder Kunststoff-Material und ist in Figur 5 in einer Vorderansicht (a) und einer Rückansicht (b) dargestellt. Die unterschiedlichen Seiten des Textil- bzw. Kunststoff-Materials sind dabei durch unterschiedliche Schraffuren veranschaulicht.

Wie aus einem Vergleich der Teilabbildungen 5a) und 5b) hervorgeht, ist im vorliegenden Beispiel das Wechselelement 60 aus einer Lage von einem Textil- oder Kunststoffmaterial hergestellt, welches an einem Ende umgeschlagen und an den seitlichen Rändern 60r verbunden wurde, um einen Taschenabschnitt 60t zu bilden, der sich über einen Teil von der Längserstreckung der Wechselelements 60 erstreckt. Diese Tasche 60t dient zur Aufnahme von Kleinteilen oder/und dazu, das Wechselelement 60 sicher an der Basis-Baugruppe 50 zu fixieren.

An den Taschenabschnitt 60t schließt sich ein Klappenabschnitt 60k an, der im zusammengebauten Zustand die zweite Taschenseitenwand 14 der Hängetasche 10 bildet. An dem dem Taschenabschnitt 60t gegenüberliegenden Längsende des Wechselelements 60 sind zwei Klemmen 28 zum Befestigen dieses Längsendes an dem Mittelteil 24m des Bügels 24 vorgesehen.

Am seitlichen Rand 60r des Taschenabschnitts 60t können vier Öffnungen 60o vorgesehen sein, deren Positionen den Positionen der Öffnungen 12o in dem Randbereich von der ersten Taschenseitenwand 12 entsprechen, und durch die, wie in Figur 5b) gezeigt, der Klemmbügel 70 hindurch gesteckt werden kann.

Die Position des oberen Randes 60or von dem Taschenabschnitt 60t des Wechselelements 60 kann einer Knickstelle 70k von dem Klemmbügel 70 entsprechen, dessen Position im zusammengebauten Zustand dem Klappverbindungsbereich 18 der Hängetasche entspricht.

Wird nun zunächst der Klemmbügel 70 in den Taschenabschnitt 60t von dem Wechselelement 60 eingesetzt, wie in Figur 5b) gezeigt, und dann der Klemmbügel 70 zusammen mit dem Wechselelement 60 an der Basis-Baugruppe 50 montiert, so dass die Vorsprünge 70v in die Öffnungen 12o eingreifen, und werden die Klemmen 28 an dem Mittelteil 24m von dem Bügel 24 als Anhängmittel 20 angebracht, so wird das Wechselelement 60 auswechselbar an der Basis-Baugruppe 50 fixiert, wodurch sich das in Figur 1 dargestellte Ausführungsbeispiel einer erfindungsgemäßen Hängetasche 10 ergibt.

Bei dem dargestellten Ausführungsbeispiel können verschiedene Wechselelemente eingesetzt werden, die sich im Material oder/und in der Größe der Taschenseitenwand oder/und der Elastizität des verwendeten Materials unterscheiden, um eine flexible Anpassung an verschiedenartige Artikel als Fördergut zu ermöglichen.

Für eine Mehrzahl oder für alle Hängetaschen kann dabei eine gleichartige Basis-Baugruppe verwendet werden, was die Kosten eines Hängetaschen-Systems reduziert und auch den Betrieb der entsprechenden Hängefördereinrichtung vereinfacht.

Zur leichteren, insbesondere automatisierten Identifizierung und Auswahl der Wechselelemente können diese (in den Figuren nicht dargestellt) jeweils mit einer Kennung versehen sein, insbesondere mit einem Barcode oder RFID-Transponder, die vorzugsweise von entsprechenden Lese-Einrichtungen der Hängefördereinrichtung ausgelesen werden kann.

Insbesondere können in einer solchen Hängefördereinrichtung passende Hängetaschen in Zuordnung zu bestimmten Warengruppen zu den betreffenden Waren herangeführt werden oder auch in deren Nähe gelagert werden, so dass insoweit schon eine Vorsortierung der Hängetaschen im Hinblick auf die darin zu transportierenden Waren stattfindet.

## Patentansprüche

1. Hängefördereinrichtung, umfassend eine Führungsschienenanordnung und ein Hängetaschen-System, umfassend wenigstens zwei, vorzugsweise eine Vielzahl von bewegbar an der Führungsschienenanordnung geführten Hängetaschen (10) als Fördergutbehälter zum Transport von Fördergut in einer Hängefördereinrichtung, mit einer ersten Taschenseitenwand (12) und einer zweiten Taschenseitenwand (14), die einander gegenüberliegend einen Fördergutaufnahmebereich (16) zwischen sich begrenzen und in einem Klappverbindungsbereich (18) so miteinander verbunden sind, dass sie zum Öffnen und Schließen des Fördergutaufnahmebereiches (16) auseinanderklappbar und zusammenklappbar sind, und mit einem Anhängmittel (20) zum Anhängen der Hängetasche (10) an eine Führungsschienenanordnung einer Hängefördereinrichtung, wobei die erste Taschenseitenwand (12) einen starren Randkonturbereich (12r) aufweist und daran um eine Schwenkachse (26) schwenkbeweglich mit dem Anhängmittel (20) verbunden ist und wobei die zweite Taschenseitenwand (14) derart mit dem Anhängmittel (20) verbunden oder davon beaufschlagbar ist, dass durch Schwenken der ersten Taschenseitenwand (12) um die Schwenkachse (26) die erste und die zweite Taschenseitenwand (12, 14) auseinanderklappbar und zusammenklappbar sind, wobei die Hängetasche (10) eine Basis-Baugruppe (50) und ein Wechselelement (60) umfasst, wobei die Basis-Baugruppe (50) das Anhängmittel (20) und den starren Randkontur-Bereich (12r) aufweist, und das Wechselelement (60) wenigstens einen Teil der zweiten Taschenseitenwand (14), vorzugsweise die gesamte zweite Taschenseitenwand (14), umfasst und auswechselbar an der Basis-Baugruppe (50) vorgesehen ist,
**dadurch gekennzeichnet, dass**
die Hängetaschen (10) sich in wenigstens einem aus Größe, Gestalt und Material der zweiten Taschenseitenwand (14) oder des Wechselelements (60) unterscheiden, wobei wenigstens die Randkontur-Bereiche (12r) und die Anhängmittel (20), vorzugsweise die Basis-Baugruppen (50), für die wenigstens zwei Hängetaschen (10) gleichartig sind; und
die Hängefördereinrichtung ferner separate Lager für die Basis-Baugruppen (50) und die verschiedenen Wechselelemente (60) umfasst, wobei die Hängefördereinrichtung wenigstens eine Station zur manuellen oder wenigstens teilweise, vorzugsweise vollständig automatisierten Zusammenstellung von Hängetaschen (10) umfasst, die dazu eingerichtet ist, jede Hängetasche (10) aus jeweils einer Basis-Baugruppe (50) und einem ausgewählten Wechselelement (60) zusammenzustellen.

2. Hängefördereinrichtung nach Anspruch 1,
**dadurch gekennzeichnet, dass** das Wechselelement (60) wenigstens abschnittsweise aus einem formschlaffen Material, insbesondere Textil oder/und aus einem elastisch nachgiebigen Material, vorzugsweise aus Kunststoff, ausgebildet ist.

3. Hängefördereinrichtung nach einem der vorhergehenden Ansprüche,
**dadurch gekennzeichnet, dass** das Wechselelement (60) als höchstens auf zwei Seiten offene Hülle oder als höchstens auf einer Seite offene Tasche ausgebildet ist.

4. Hängefördereinrichtung nach einem der vorhergehenden Ansprüche,
**dadurch gekennzeichnet, dass** das Wechselelement (60) vermittels einer Klemm- oder Klips-Verbindung auswechselbar an der Basis-Baugruppe (50) vorgesehen ist, beispielsweise vermittels eines Klemmbügels (70).

5. Hängefördereinrichtung nach einem der vorhergehenden Ansprüche, **dadurch gekennzeichnet, dass** das Wechselelement (60) vermittels Druckknöpfe, Reiß- oder Klettverschlüsse auswechselbar an der Basis-Baugruppe (50) vorgesehen ist.

6. Hängefördereinrichtung nach einem der vorherigen Ansprüche, **dadurch gekennzeichnet, dass** das Wechselelement (60) vermittels eines Klemmbügels (70) auswechselbar an der Basis-Baugruppe (50) vorgesehen ist.

7. Hängefördereinrichtung nach einem der vorhergehenden Ansprüche, **dadurch gekennzeichnet, dass** die erste Taschenseitenwand (12) ein Tablett umfasst und an dem Tablett schwenkbeweglich mit dem Anhängmittel (20) verbunden ist, wobei das Wechselelement (60) auswechselbar an dem Tablett vorgesehen ist.

8. Hängefördereinrichtung nach einem der vorhergehenden Ansprüche, **dadurch gekennzeichnet, dass** an dem Wechselelement (60) wenigstens eine Tasche oder ein Trennelement zur Unterteilung des Fördergutaufnahmebereiches (60) in mehrere Teilbereiche vorgesehen ist.

9. Hängefördereinrichtung nach einem der vorhergehenden Ansprüche, **dadurch gekennzeichnet, dass** die zweiten Taschenseitenwände (14) oder die Wechselelemente (60) jeweils mit einer vorzugsweise automatisch auslesbaren Kennung versehen sind, beispielsweise in der Form eines Strichcodes, eines 2D-Codes oder eines RFID-Transponders.

## Claims

1. Suspended conveyor device comprising a guide rail arrangement and a suspended pouch system, comprising at least two, preferably a plurality of suspended pouches (10) which are movably guided on the guide rail arrangement as conveyed goods containers for transporting goods to be conveyed in a suspended conveyor device, having a first pouch side wall (12) and a second pouch side wall (14) which, opposite one another, delimit a conveyed goods receiving region (16) therebetween and are interconnected in a folding connection region (18) in such a way that they can be unfolded and folded to open and close the conveyed goods receiving region (16), and having a suspension means (20) for suspending the suspended pouch (10) on a guide rail arrangement of a suspended conveyor device, the first pouch side wall (12) having a rigid edge contour region (12r) and being connected at said region to the suspension means (20) so as to be pivotable about a pivot axis (26), and the second pouch side wall (14) being connected to or acted upon by the suspension means (20) in such a way that, by pivoting the first pouch side wall (12) about the pivot axis (26), the first and the second pouch side walls (12, 14) can be unfolded and folded, the suspended pouch (10) comprising a basic assembly (50) and an interchangeable element (60), the basic assembly (50) having the suspension means (20) and the rigid edge contour region (12r), and the interchangeable element (60) comprising at least part of the second pouch side wall (14), preferably the entire second pouch side wall (14), and being provided on the basic assembly (50) in an interchangeable manner, **characterised in that** the suspended pouches (10) differ in at least one of size, shape and material of the second pouch side wall (14) or of the interchangeable element (60), at least the edge contour regions (12r) and the suspension means (20), preferably the basic assemblies (50), being identical for the at least two suspended pouches (10); and
the suspended conveyor device further comprises separate stores for the basic assemblies (50) and the various interchangeable elements (60), the suspended conveyor device comprising at least one station for the manual or at least partially, preferably completely automated assembly of suspended pouches (10), which station is designed to assemble each suspended pouch (10) from a relevant basic assembly (50) and a selected interchangeable element (60).

2. Suspended conveyor device according to claim 1, **characterised in that** the interchangeable element (60) is formed at least in portions from a shapeless material, in particular a textile and/or from an elastically flexible material, preferably from a plastics material.

3. Suspended conveyor device according to either of the preceding claims, **characterised in that** the interchangeable element (60) is designed as a sleeve which is open at most on two sides or as a pouch which is open at most on one side.

4. Suspended conveyor device according to any of the preceding claims, **characterised in that** the interchangeable element (60) is provided on the basic assembly (50) in an interchangeable manner by means of a clamp or clip connection, for example by means of a clamping bracket (70).

5. Suspended conveyor device according to any of the preceding claims, **characterised in that** the interchangeable element (60) is provided on the basic assembly (50) in an interchangeable manner by means of press studs, zip fasteners or hook and loop fasteners.

6. Suspended conveyor device according to any of the preceding claims, **characterised in that** the interchangeable element (60) is provided on the basic assembly (50) in an interchangeable manner by means of a clamping bracket (70).

7. Suspended conveyor device according to any of the preceding claims, **characterised in that** the first pouch side wall (12) comprises a tray and is pivotally connected to the suspension means (20) on the tray, the interchangeable element (60) being provided on the tray in an interchangeable manner.

8. Suspended conveyor device according to any of the preceding claims, **characterised in that** at least one pouch or a separating element is provided on the interchangeable element (60) to divide the conveyed goods receiving region (60) into a plurality of portions.

9. Suspended conveyor device according to any of the preceding claims, **characterised in that** the second pouch side walls (14) or the interchangeable elements (60) are each provided with a preferably automatically readable identifier, for example in the form of a barcode, a 2D code or an RFID transponder.

## Revendications

1. Convoyeur aérien comprenant un agencement de rail de guidage et un système de sac suspendu, comprenant au moins deux, de préférence une pluralité de sacs suspendus (10) guidés de manière mobile au niveau de l'agencement de rail de guidage comme récipient de produits à transporter pour le transport de produits à transporter dans un convoyeur aérien, avec une première paroi latérale de sac (12) et une seconde paroi latérale de sac (14) qui délimitent entre elles de manière opposée l'une à l'autre une zone de réception de produits à transporter (16) et sont reliées entre elles dans une zone de liaison rabattable (18) de sorte qu'elles puissent être dépliées et repliées pour l'ouverture et la fermeture de la zone de réception de produits à transporter (16), et avec un moyen de suspension (20) pour la suspension du sac suspendu (10) à un agencement de rail de guidage d'un convoyeur aérien, dans lequel la première paroi latérale de sac (12) présente une zone de contour de bord (12r) rigide et est reliée au niveau de celle-ci de manière mobile en pivotement autour d'un axe de pivotement (26) au moyen de suspension (20) et dans lequel la seconde paroi latérale de sac (14) est reliée au moyen de suspension (20) ou peut être sollicitée par celui-ci de telle manière que par pivotement de la première paroi latérale de sac (12) autour de l'axe de pivotement (26) la première et la seconde paroi latérale de sac (12, 14) soient dépliables et repliables, dans lequel le sac suspendu (10) comporte un module de base (50) et un élément remplaçable (60), dans lequel le module de base (50) présente le moyen de suspension (20) et la zone de contour de bord (12r) rigide, et l'élément remplaçable (60) comporte au moins une partie de la seconde paroi latérale de sac (14), de préférence la seconde paroi latérale de sac (14) entière et de manière interchangeable sur le module de base (50),
**caractérisé en ce que**
les sacs suspendus (10) se distinguent dans au moins un parmi grandeur, forme et matériau de la seconde paroi latérale de sac (14) ou de l'élément remplaçable (60), dans lequel au moins les zones de contour de bord (12r) et les moyens de suspension (20), de préférence les modules de base (50), sont similaires pour les au moins deux sacs suspendus (10) ; et
le convoyeur aérien comporte de plus des paliers séparés pour les modules de base (50) et les différents éléments remplaçables (60), dans lequel le convoyeur aérien comporte au moins un poste pour l'assemblage manuel ou au moins partiellement, de préférence complètement automatisé de sacs suspendus (10) qui est aménagé afin d'assembler chaque sac suspendu (10) à partir de respectivement un module de base (50) et un élément remplaçable (60) sélectionné.

2. Convoyeur aérien selon la revendication 1, **caractérisé en ce que** l'élément remplaçable (60) est réalisé au moins par sections en un matériau mou de forme, en particulier textile et/ou en un matériau flexible élastiquement, de préférence en matière plastique.

3. Convoyeur aérien selon l'une des revendications précédentes, **caractérisé en ce que** l'élément remplaçable (60) est réalisé comme une enveloppe ouverte au plus sur deux côtés ou comme un sac ouvert au plus sur un côté.

4. Convoyeur aérien selon l'une des revendications précédentes, **caractérisé en ce que** l'élément remplaçable (60) est prévu au moyen d'une liaison par serrage ou clipsage de manière interchangeable sur le module de base (50), par exemple au moyen d'un étrier de serrage (70).

5. Convoyeur aérien selon l'une des revendications précédentes, **caractérisé en ce que** l'élément remplaçable (60) est prévu au moyen de boutons-poussoirs, fermetures Eclair ou Velcro de manière interchangeable sur le module de base (50).

6. Convoyeur aérien selon l'une des revendications précédentes, **caractérisé en ce que** l'élément remplaçable (60) est prévu au moyen d'un étrier de serrage (70) de manière interchangeable au niveau du module de base (50).

7. Convoyeur aérien selon l'une des revendications précédentes, **caractérisé en ce que** la première paroi latérale de sac (12) comporte une tablette et est reliée au niveau de la tablette de manière mobile en pivotement au moyen de suspension (20), dans lequel l'élément remplaçable (60) est prévu de manière interchangeable au niveau de la tablette.

8. Convoyeur aérien selon l'une des revendications précédentes, **caractérisé en ce qu'au** moins un sac ou un élément de séparation est prévu pour la séparation de la zone de réception de produits à transporter (60) en plusieurs zones partielles au niveau de l'élément remplaçable (60).

9. Convoyeur aérien selon l'une des revendications précédentes, **caractérisé en ce que** les secondes parois latérales de sac (14) ou les éléments remplaçables (60) sont pourvus respectivement d'un identifiant lisible de préférence automatiquement, par exemple sous la forme d'un code-barres, d'un code 2D ou d'un transpondeur RFID.
